# EUROPEAN PATENT APPLICATION

(11) **EP 2 090 592 A1**
(43) Date of publication of application: **19.08.2009**
(21) Application number: 07113559.4
(22) Date of filing: 31.07.2007
(51) Int. Cl.: C08B 37/00, A61L 27/52, A61L 31/14

(54) **Biodegradable hydrogels based on click chemistry**

(71) Applicant: OctoPlus Sciences B.V., 2333 CL Leiden (NL)
(72) Inventor: Hennink, Wilhelmus Everhardus, Waddinxveen 2743 CZ (NL); de Geest, Bruno Gerard, De Pinte 9840 (BE); Van Camp, Wim, Temse B-9140 (BE); Du Prez, Filip, Gent B-9000 (BE)
(74) Representative: van Loon, C.J.J.

(57) **Abstract**

The present invention provides modified polymers which can be crosslinked into chemical hydrogels through cycloaddition reactions. It also discloses methods for preparing hydrogels using click chemistry reactions and hydrogels which can be prepared through such methods. The hydrogels are formed easily under mild conditions even in the presence of chemically sensitive bioactive agents, and they are readily biodegradable due to the presence a of bond which is hydrolysable under physiological conditions in the crosslinks. The hydrogels are suitable in tissue engineering or for the delivery of active compounds in a controlled manner.

## Description

### FIELD OF THE INVENTION

The present invention is in the field of biodegradable hydrogels, and includes related aspects such as polymers which are crosslinkable to obtain biodegradable hydrogels, the hydrogels obtained, and microparticles comprising such hydrogels. Further, the invention relates methods for preparing such hydrogels. Furthermore, the invention relates to the use of the hydrogels or microparticles especially in the controlled delivery of active compounds such as drug substances or diagnostic agents, and in tissue engineering. Also pharmaceutical compositions are encompassed.

### BACKGROUND OF THE INVENTION

Biodegradable hydrogels are an important class of materials for tissue engineering and for the controlled release of pharmaceutically and nutracentically active compounds such as therapeutic proteins. Hydrogels are three-dimensional polymeric networks made by chemical or physical crosslinking of hydrophilic polymers (Hennink WE and Van Nostrum CF. Novel crosslinking methods to design hydrogels. Adv. Drug Del. Rev. 54, 13-36, 2002). In chemically crosslinked gels, the polymers are connected primarily by covalent bonds. In physically crosslinked gels, the network is formed by physical or physicochemical interactions between different polymer chains.

In recent years, there has been an increasing interest in physically crosslinked gels, especially in those gel compositions in which gel formation occurs under mild conditions and in the absence of organic solvents. The main reason for this interest is that commonly used crosslinking reagents and organic solvents which tend to have detrimental effects on bioactive materials, such as proteins, which are often incorporated into these gels as active substances, can be avoided in the preparation of drug delivery systems or tissue engineering matrices based on such gels. These agents and solvents can not only affect the active substances to be entrapped, but they are often relatively toxic compounds whose residuals have to be removed carefully from the gels before these can be used.

For example, WO 00/48576 discloses stereocomplex hydrogels - which are a type of physical hydrogels - prepared from a mixture of polymers having complementary, i.e. opposite, chirality. The chiral regions are primarily composed of units derived from lactic acid. In particular, graft polymers are described in which oligo(lactate) grafts represent the chiral regions. De Jong et al. (J. Controlled Release 72, 47-56, 2001) also describes biodegradable hydrogels based on stereocomplex formation between D- and L-lactic acid oligomers grafted to dextran backbones. Lim et al. (Macromol. Rapid Commun. 21, 464-471, 2000) developed hydrogels from two enantiomeric amphiphilic graft copolymers having backbones of poly(2-hydroxyethyl methacrylate) and side chains of oligo(D-lactide) or oligo(L-lactide), respectively. Also in these hydrogels, stereocomplex formation occurs between the side chains of opposite chirality. However, it is still difficult to provide physical hydrogels having the same stability as some of the known chemical hydrogels possess, which may limit their applications at present.

On the other hand, recent progress in chemical hydrogels has shown that "click chemistry" may be used to covalently crosslink hydrophilic polymers under mild conditions. For example, WO 2007/035296 discloses *inter alia* hydrogels which are formed from hydrophilic polymers that are crosslinked with bi- or multifunctional linkers which are cycloaddition reactive. Similarly, Malkoch et al., Chem. Commun. 2006, 2774-6, disclose hydrogels based on polyethylene glycol which are prepared by click chemistry using tetrafunctional azide crosslinkers. Potential disadvantages of these hydrogels include their reliance on small bi- or multifunctional, highly reactive, crosslinking agents of unknown biocompatibility, which would limit the use of these hydrogels e.g. for *in-situ* applications in which the hydrogel is prepared from reactants that are in, or in contact with, living tissue.

Crescenzi et al., Biomacromolecules 2007 [8], 1844-50, describe the use of click chemistry to prepare hydrogels from hyaluronic acid. However, these hydrogels exhibit an undesirable release behaviour showing incomplete release of an entrapped drug substance - possibly indicating poor biodegradability, but at the same time significant burst release. Moreover, it is not known how these hydrogels can be prepared in the form of spherical microparticles which are needed for certain drug delivery applications. Neither is it known whether they hydrolyse readily under physiological conditions.

It is therefore an object of the invention to provide hydrogels which do not exhibit one or more of the disadvantages of the presently known hydrogels, and especially not the above-mentioned disadvantages.. Another object is to provide polymers which are useful for the preparation of such hydrogels, and methods for the preparation and uses of the hydrogels. Further objects will become obvious on the basis of the following description and claims.

### SUMMARY OF THE INVENTION

In a first aspect, the invention provides a polymer comprising a hydrophilic backbone and at least one moiety capable of undergoing a cycloaddition reaction. The moiety is connected to the backbone of the polymer through a linker which comprises a bond or linkage which is hydrolysable under physiological conditions. Examples of specific moieties capable of undergoing cycloaddition are azide and alkyne moieties which react with each other to form a triazole structure. Examples of bonds which are hydrolysable under physiological conditions or linkages include dioxanone, carbonate and anhydride bonds. Preferably, the polymer comprises at least two cycloaddition reactive moieties of the same type.

In a second aspect, the invention provides a related method of making a hydrogel. The method comprises the step of (a) providing a first and a second polymer, each of the polymers comprising a hydrophilic polymeric backbone and one or more moieties capable of undergoing cycloaddition. The respective moieties of the first polymer are reactive with the respective moieties of the second polymer, said moiety of the first polymer being reactive with said moiety of the second polymer. The method further comprises the step (b) of allowing the first and the second polymer to react with each other to form a cycloaddition product. Moreover, the reactive moiety of at least one of the polymers is connected to the backbone through a linker which comprises a bond which is hydrolysable under physiological conditions or linkage. Preferably, at least one of the polymers comprises at least two cycloaddition reactive moieties of the same type.

In a third aspect, the invention provides a hydrogel which comprises a network of hydrophilic polymeric chains which are interconnected to each other through crosslinks. At least one of the crosslinks is a covalent crosslink which comprises at least one bond which is hydrolysable under physiological conditions and at least one moiety which is a cycloaddition product. The hydrogel may be prepared from one or more polymers as provided by the invention, or it may be prepared by the method described herein. The hydrogel may be in the form of a microparticle or a scaffold for tissue engineering.

In further aspects, the invention provides the use of such hydrogel as a medicine or a component thereof, and pharmaceutical compositions comprising the hydrogel, optionally in the form of microparticles. More aspects of the invention are disclosed in the detailed description below, in the examples and the appending claims.

### BRIEF DESCRIPTION OF THE DRAWINGS

Fig. 1 shows a reaction scheme for the preparation of dextran-azidopropylcarbonate.
Fig. 2 shows a reaction scheme for the preparation of dextran-propargylcarbonate.
Fig. 3 shows a reaction scheme for the cycloaddition reaction of dextran-azidopropylcarbonate and dextran-propargylcarbonate.
Fig. 4 shows the *in vitro* release of FITC-dextran from hydrogel microparticles prepared from dextran-azidopropylcarbonate and dextran-propargylcarbonate.
Fig. 5 shows a proposed hydrolytic degradation reaction of a hydrogel prepared from dextran-azidopropylcarbonate and dextran-propargylcarbonate.
Fig. 6 shows the ¹H-NMR spectrum in D₂O of dex-C≡C (500 MHz).
Fig. 7 shows the ¹H-NMR spectrum in D₂O of dex-N₃ (500 MHz).

### DETAILED DESCRIPTION OF THE INVENTION

In this description, certain expressions are used rather frequently as they relate to important technical aspects of features or embodiments. For some of these expressions, the following definitions should be used unless the specific context in which they are used requires a different interpretation.

Polymer. As used herein, a polymer is a substance composed of macromolecules. Macromolecules or polymer molecules, in turn, are individual molecules of high relative molecular mass, the structure of which essentially comprises the multiple repetition of units derived, actually or conceptually, from molecules of low relative molecular mass. In common technical language, however, the term polymer is often used for both the substance and the macromolecules of which a polymeric substance is composed. It is this broader definition which is used herein, i.e. the term can refer to the substance or to a polymeric molecule or macromolecule, as applicable and evident from the respective context. Furthermore, a polymer may refer to a copolymer, a mixture of (co)polymers, a crosslinked (co)polymer, or to polymeric networks.

Backbone. As used herein, a backbone is the main chain of a macromolecule to which all other chains, if any, may be regarded as being pendant.

Hydrophilic. As used herein, a substance, molecule, or moiety is hydrophilic if it is capable of interaction with polar solvents, and in particular with water. Polymers are also considered hydrophilic if, for example, they are water-soluble, i.e. in their non-crosslinked form. In this respect, water-soluble means soluble in water or in an optionally buffered aqueous medium substantially free of organic solvents at room temperature, exhibiting a solubility of at least about 1 mg/ml. This definition should be understood so as to comprise polymers which cannot be dissolved in water at room temperature, but at a higher temperature, as long as they remain in solution when cooled to room temperature. Alternatively, hydrophilic polymers may be not be soluble in water, but exhibit a significant degree of swelling in water or in an optionally buffered aqueous medium at room temperature. In particular, a polymer which is not water-soluble is hydrophilic if it gains at least about 5 % in either volume or mass in such aqueous environment after equilibration. Another characteristic of many hydrophilic polymers is that they are better soluble in polar or even water-miscible organic solvents such as ethanol than in non-polar solvents such as hexane.

Hydrolysable under physiological conditions. As used herein, a substance, molecule, moiety or chemical bond is hydrolysable under physiological conditions if it is susceptible of hydrolytic degradation in an aqueous environment at physiological conditions even in the absence of enzymatic activity. Physiological conditions primarily mean a pH which is close to a physiological pH and a temperature which is close to a physiological temperature. Under these conditions, hydrolysable compounds or bonds exhibit substantial hydrolytic degradation within time periods of interest for drug delivery or tissue engineering applications, such as over several hours, days, weeks, months, or a few years, without requiring enzymatic catalysis.

Hydrogel. As used herein, a hydrogel is a three-dimensional polymeric network made by chemical or physical crosslinking of one or more hydrophilic polymers. Physically crosslinked hydrogels are sometimes also termed physical hydrogels, whereas chemically crosslinked hydrogels are also called chemical hydrogels.

Linker. As used herein, a linker is an at least bivalent chemical structure (e.g. an atom, ion, molecule, or moiety) which connects two other chemical structures covalently or non-covalently. For example, a linker may connect a pendant moiety to a backbone.

Moiety. As used herein, a moiety is a part of a molecule comprising at least one atom. Typically, a moiety comprises a functional chemical group.

Active compound. As used herein, an active compound is any chemical or biological substance or mixture of substances which is bioactive and useful for the diagnosis, prevention or treatment of diseases, symptoms, and other conditions of the body, or for influencing a body function. In this context, the terms "active" and "bioactive" may be used interchangeably. Other terms which may be used are active agent, active ingredient, drug substance, and the like.

Microparticle. A microparticle, as used herein, is a substantially solid or semisolid particle having a weight- or volume average diameter in the region of about 0.1 to about 1.000 µm, but usually of about 0.1 to about 500 µm, and often from about 1 to about 500 µm, regardless of its composition, geometrical shape, or internal structure. For example, spherical microparticles, which are often referred to as microspheres or nanospheres, are included in the term microparticles, just as capsular structures, such as micro- or nanocapsules. Several other synonyms may exist to describe microparticles as defined above.

Cycloaddition. As used herein, a cycloaddition is a chemical addition reaction which results in a cyclic structure. In this context, an addition reaction is a reaction in which at least two molecules react to form one larger molecule. Typically, a cycloaddition involves the loss of π-bonds and the gain of σ-bonds.

Capable of undergoing a cycloaddition reaction. As used herein, a chemical entity such as a molecule or moiety is capable of undergoing a cycloaddition reaction, or cycloaddition reactive, if it constitutes a potential reactant in a cycloaddition reaction. In order that the cycloaddition reaction can actually occur, a further reactant must be provided which comprises a moiety that is reactive with the first cycloaddition reactive moiety.

The polymer provided by the invention comprises a hydrophilic backbone and a functional group or moiety which is capable of undergoing a cycloaddition reaction. The cycloaddition reactive moiety is connected to the backbone through a linker which comprises a bond which is hydrolysable under physiological conditions. As will be shown in more detail below, the polymer is particularly suitable for the preparation of hydrogels, in particular of hydrogels which are to be used in pharmaceutical or biomedical applications, *e.g*. as carriers of chemically sensitive active compounds. The hydrogels may be prepared from the polymer under mild conditions so that the bioactivity of active compounds which are to be incorporated may be easily retained. Moreover, the presence of a bond or linkage which is hydrolysable under physiological conditions ensures that the hydrogels exhibit the desired degree of biodegradability, which is often much higher than the typical biodegradability of a natural or synthetic polymer from which the polymer of the invention may be derived.

In terms of its chemistry, the polymer of the invention may be derived from various types of natural, semisynthetic or synthetic polymers having a hydrophilic backbone. In selecting the class of the polymer, the intended use should be taken into consideration.

Among the hydrophilic polymers which are suitable for carrying out the present invention are, for example, hydrophilic polysaccharides, including native and derivatised polysaccharides, linear or branched, such as dextran, starch, amylose, amylopectin, cellulose, alginic acid, pectin, chitosan, hyaluronic acid, xanthan gum, pullulan, gellan gum, agar, carrageenan, dextrin, guar gum, carob gum, and inulin. Among the particularly preferred polysaccharides are dextran derivatives, which are known to exhibit excellent biocompatibility.

Other suitable hydrophilic polymers include polypeptides. Examples of polypeptides which are useful to carry out the present invention include albumin, lysozyme, synthetic poly(amino acids), gelatin, collagen, poly(lysine) and related copolymers, poly(glutamic acid) and related copolymers, elastin, fibrin, casein, whey protein, lactoglobulin, lactalbumin, and soy protein. Again, the polypeptides may be used as substrates for crosslinking in their native or derivatised forms.

Further examples of hydrophilic polymers according to the invention include poly(acrylates), poly(acrylamides), poly(alkyl acrylates), poly(alkyl acrylamides), in particular poly(methacrylate), poly(hydroxyethyl methacrylate), poly(hydroxypropyl methacrylate), poly(hydroxyethyl methacrylamide), poly(hydroxypropyl methacrylamide); moreover poly(vinyl alcohol), poly(ethylene glycol), water soluble polyphosphazenes, and mixtures of any of the above.

In certain embodiments, the molecular weight of the polymer is selected in the range from about 2,000 to about 500,000, and in particular from about 10,000 to about 150,000, or from about 20,000 to about 80,000, respectively.

According to the invention, the polymer has a moiety or functional group which is capable of undergoing a cycloaddition reaction. In particular, the polymer may comprise two or more of such moieties per macromolecule. These moieties are to ensure that the polymer is easily crosslinkable to form a chemical hydrogel under very mild conditions. Types of cycloaddition reactions that are of particular interest are those that have recently received much attention in the context of the so-called "click chemistry", which aims at the highly selective construction of larger chemical structures in high yields under simple and mild reaction conditions. One of the typical features of such chemical reactions is that they are distinctly exothermic with a relatively high thermodynamic driving force, such as more than 50 or even 80 kJ/mol. Often, a click reaction results in a single product.

In particular, polar cycloaddition reactions such as the Huisgen cycloaddition, which is also known as a 1,3-dipolar cycloaddition or as azide-alkyne cycloaddition, are useful to carry out the invention. This reaction between an azide and an alkyne leads to the formation of a cyclic 1,2,3-triazole structure. It is often used in combination with a copper-(I) or -(II) catalyst, preferably with copper sulphate in the presence of a reducing agent such as sodium ascorbate.

For example, in order to make use of the azide-alkyne cycloaddition, the polymer may be modified such as to have at least two azide or alkyne groups per macromolecule. An azide group may be introduced to a macromolecule via small azides such as 3-azidopropanol. An example for a reagent which is useful for introducing an alkyne group is propargyl alcohol. Typically, the reagent by which the required functionalities are introduced will also determine the linker, i.e. the chemical structure linking the macromolecule and the functional group.

According to the invention, at least one of the moieties capable of undergoing cycloaddition is connected to the hydrophilic backbone through a linker which comprises a bond which is hydrolysable under physiological conditions, such as a carbonate bond. While the cycloaddition reactive moieties ensure that the polymer can be used to readily form hydrogel by chemical crosslinking under mild conditions, the presence of bonds in the linkers which are hydrolysable under physiological conditions ensure that the resulting hydrogels are readily hydrolysable and exhibit excellent biocompatibility. Other example for bonds which are hydrolysable under physiological conditions include lactate, glycolate, succinate, and peptide bonds. Also ester bonds may be highly hydrolysable depending on the chemical nature of their neighbouring groups or moieties. As used herein, a carbonate group or unit is a divalent CO₃ unit represented by the formula -O-(C=O)-O-. A lactate or glycolate group or unit is the divalent unit derived from lactic or glycolic acid as it is e.g. present in poly(lactic acid) or poly(glycolic acid), respectively. Similarly, a succinate group or unit is a divalent unit derived from succinic acid. Peptide bonds are the amide bonds between amino acids linked through their amino- and carboxylic acid groups, respectively. All these groups have been used in monomeric, oligomeric, or polymeric form in humans for a significant time, and therefore they can be considered safe.

It is noted that the hydrolysability of a bond such as an amide or ester bond may also depend on the properties of the atoms or moieties in the neighbourhood of the bond. For the purpose of carrying out the invention, it is important to ensure that the hydrolysable bond will indeed hydrolyse at an appreciable rate under physiological conditions. Typically, an amide or ester bond will not fulfil this condition unless the bond is relatively labile due to the effect of neighbouring atoms or groups. On the other hand, a carbonate ester bond will generally have the required degree of hydrolytic lability.

If the intended use of the polymer is the preparation of hydrogels for the delivery of active compounds to a patient, bonds may be selected which exhibit at least 50% hydrolysis under physiological conditions within a period of not more than about a year, or which hydrolyse substantially completely within about a year or less. Depending on the intended period of delivery of the active compound, the time for at least 50% hydrolysis to occur may also range from about one day to about 6 months, and in particular from about 3 days to about 3 months, or from about one week to about 2 months, respectively.

In a further embodiment, the hydrolysability of the bonds is selected to ensure that a crosslinked hydrogel which is prepared from two polymers as defined herein hydrolyses under physiological conditions within a period of less than about one year into hydrolysis products having a molecular weight of not more than about 150,000. In particular, the molecular weight of the hydrolysis products may be less than about 100,000, or less than about 80,000, or less than about 70,000, respectively, in order to facilitate the elimination from the body of a patient to whom the hydrogel is administered.

The introduction of a highly hydrolysable group which readily hydrolyses under physiological conditions may be achieved, for example, by using carbonyl diimidazole (CDI) as activator of the hydroxyl group of certain useful reagents such as propargylalcohol or 3-azidopropanol. The activated reagents can easily be coupled to free hydroxyl groups of many types of hydrophilic polymers, such as polysaccharides. In this way, hydrophilic polymers having pendant azidopropylcarbonate or propargylcarbonate moieties are formed. The use of CDI for the activation of azides or alkynes and the introduction of such moieties into macromolecules represents one of the aspects of the present invention.

In one of the specific embodiments, substantially all linkers of a thus modified polymer that are cycloaddition reactive are connected via linkers which each include at least one highly hydrolysable group. Optionally, some or all of the linkers may also comprise two or more of such highly hydrolysable groups as defined herein.

Furthermore, it may be very useful to carry out the invention in such a way that both species of cycloaddition reactive moieties, i.e. the cycloaddition reactive moieties of two polymers which are capable of forming a hydrogel with each other, are connected to their respective polymer backbones via linkers having at least one bond which is hydrolysable under physiological conditions each. An advantage of this particular embodiment is that a crosslinked hydrogel which is prepared from such polymers may be designed to hydrolyse into the native or unmodified polymers with high biocompatibility and only one species of a low molecular weight hydrolysis product which is likely to be eliminated easily from a physiological environment. If the polymer chains themselves are selected to be chemically identical except for the cycloaddition reactive moieties which have to be complementary (*e,g*. azide and alkyne), the additional advantage of obtaining only one higher molecular weight hydrolysis product is obtained. For example, if a polysaccharide such as dextran is selected as backbone, CDI-activated propargylalcohol and CDI-activated 3-azidopropanol are separately used for the introduction of linkers that each comprise a carbonate ester group which is highly hydrolysable and either an azide or an alkyne moiety, the hydrogel which results from crosslinking the two modified polymers would hydrolyse in a physiological environment into dextran and one low molecular weight triazole compound only, thus substantially reducing the risk of poor tolerability.

The degree of substitution with respect to the cycloaddition reactive moieties typically has a large impact on the crosslinking density, swelling and degradation behaviour of a hydrogel prepared from the respective polymers. In selecting the degree of substitution, the desired use, but also the nature and molecular weight of the monomeric units of the polymer backbone(s) should be taken into consideration. In the case of polysaccharide backbones, for example, and azide and alkyne moieties, a normally useful degree of substitution for drug delivery and tissue engineering applications may be selected in the range from about 1 to about 50 cycloaddition reactive moieties per 100 saccharide monomers, i,e. representing a degree of substitution (DS) from about 1 to about 50. In further embodiments, the degree of substitution may be selected in the range from about 2 to 30, such as about 5, 10, 15, or 20.

In a further aspect, the invention is directed to a method of making a hydrogel which relies on the use of one or more polymers as described above. More precisely, the method is characterised by the steps of (a) providing a first and a second polymer, each of the polymers comprising a hydrophilic polymeric backbone and a moiety capable of undergoing cycloaddition, the moiety of the first polymer being reactive with the moiety of the second polymer; and (b) allowing the first and the second polymer to react with each other to form a cycloaddition product. Furthermore, the reactive moiety of at least one of the polymers is connected to the backbone through a linker which comprises a bond or linkage which is hydrolysable under physiological conditions. In a particular embodiment, one or both of the polymers comprise at least two moieties which are capable of undergoing a cycloaddition reaction.

For carrying out this method, the same teachings regarding the selection of the polymer backbone, the bond which is hydrolysable under physiological conditions and the cycloaddition reactive moieties may be applied in the same manner as has been put forth in the context of the polymer claimed and described herein. Optionally, the method is conducted in such as way that both the first and the second polymer are selected to be polymers according to the present invention, which means amongst others that both polymers have at least one linker per main chain which comprises a bond which is hydrolysable under physiological conditions. Alternatively, only one of the polymers comprises one or more bonds which are hydrolysable under physiological conditions in its linkers through which the cycloaddition reactive moieties are connected to the backbone.

In a specific embodiment, the method is conducted by allowing two polymers based on substantially the same backbone to react with each other, leading to a chemically crosslinked hydrogel comprising a three-dimensional polymeric network based on a single macromolecular species. For example, two polysaccharides or polypeptides of the same chemical type may be used of which one comprises a first cycloaddition reactive moiety and the other a second cycloaddition reactive moiety which is reactive with the first moiety. According to a further specific embodiment, two modified dextrans which are cycloaddition reactive with each other are combined to carry out the method, such as dextran-azidopropylcarbonate and dextran-propargylcarbonate.

If it is desired that the hydrogel which results from the method comprises an active compound, such as a drug substance or a diagnostic agent, it may be desirable to incorporate that active compound by conducting the method in its presence so as to entrap it in the nascent polymeric network. Alternatively, it is possible to first prepare the hydrogel by performing the cycloaddition reaction and only subsequently load the hydrogel with the active compound, e.g. by incubating it with a solution of the active compound, allowing the compound to diffuse into the polymeric network while the hydrogel is in a swollen state. Some of the particular advantages of the invention, however, are believed to be best exploited when incorporating the active compound already during the formation of the hydrogel, even if the active compound is chemically sensitive. As mentioned before, the method can be conducted in the presence of such sensitive molecules because the cycloaddition reaction can be carried out under very mild conditions.

In further particular embodiments, the cycloaddition reaction is carried out at a temperature of not more than about 40 °C, or not more than about 35 °C, or not more than about 30 °C, or not more than about room temperature, or at a temperature in the range from about 0 °C to about 25 °C, such as about 4 to 20 °C, or about 6 to 15 °C. In a further embodiment, the reaction is also conducted under normal pressure. Moreover, the reaction may be carried out in the substantial absence of lipophilic organic solvents, which solvents would bring about the risk of detrimentally affecting the bioactivity of the active compound.

If the cycloaddition is a Huisgen-type dipolar cycloaddition, it may be triggered by the addition of a suitable catalyst, such as copper-(I) or copper-(II) ions and salts. For example, a combination of CuSO₄ and sodium ascorbate effectively triggers most azide-alkyne cycloadditions in an aqueous medium.

If it is desired that the hydrogel prepared by the method is in the form of microparticles or microspheres, it is considered a useful option to carry out the reaction between the first and the second polymer in an emulsion, i.e. in the dispersed or discontinuous phase of an emulsion. In particular, the emulsion phase comprising the reacting polymers may be an aqueous phase, which means that the solvent of the phase is water, a hydrophilic liquid miscible with water such as glycerol or liquid polyethylene glycol, or a mixture of water and one or more of such water-miscible liquids. The dispersed aqueous phase may be comprised in a w/w-emulsion, a w/o-emulsion, or a double emulsion.

In a particular embodiment, the first and the second cycloaddition reactive polymer are dissolved in the dispersed aqueous phase of a w/w-emulsion whose continuous phase comprises a compound which is capable of aqueous phase separation when combined with the first and/or the second polymer. For example, when the first and the second polymer are dextran derivatives, the outer phase of the w/w-emulsion may comprise polyethylene glycol which has a limited phase compatibility with dextrans in water. Thus, the crosslinking reaction may be conducted in an all aqueous system, preferably in the absence of an organic solvent that is not - in principle - water-miscible.

The droplet size of the emulsion, which may be decreased e.g. by mechanical means such as high-pressure homogenisation or ultra-turraxing, may be selected to determine the particle size of the crosslinked hydrogel microparticles. For example, the first and the second polymer may be dissolved in water, subsequently combined with a continuous phase or, if applicable, a phase separation agent such as PEG, optionally homogenised to obtain the desired droplet size. Then, the cycloaddition reaction and thereby the crosslinking of the hydrogel may be started by the addition of the catalyst or catalyst mixture to the emulsion. According to a specific example, to an aqueous solution of dextran-propargyl carbonate, dextran-azidopropylcarbonate and an active compound dispersed in an continuous phase representing an aqueous solution of polyethylene glycol, a mixture of copper sulphate and sodium ascorbate may be added to start the crosslinking reaction.

Therefore, if it is desired that the hydrogel is in the form of microparticles, the selection of a dextran or dextran derivative as hydrophilic polymer on which the hydrogel is based is particularly useful as the w/w-emulsion method which works under particularly mild conditions as described above can be used. Moreover, the selection of a dextran or dextran derivative is advantageous because dextrans are readily available at moderate cost and have a remarkable biocompatibility and safety record.

As indicated above, the method can be carried out in the presence of an active compound, typically resulting in the incorporation of the active compound within the hydrogel prepared by the method. Among the preferred active compounds are those which are used in chronical or long-term treatment regimen and/or which have a low oral bioavailability, such as hormones, growth factors, hormone antagonists, antipsychotics, antidepressants, cardiovascular drugs, and the like. In another aspect, a preferred class of active compounds is that of peptides and proteins, in particular proteins, which can be delivered effectively with the gel compositions of the invention, providing drug release over extended time periods, thus eliminating the need for the frequent injection of these compounds.

Among the preferred peptides and proteins are erythropoetins, such as epoetin alpha, epoetin beta, darbepoetin, haemoglobin raffimer, and analogues or derivatives thereof; interferons, such as interferon alpha, interferon alpha-2b, PEG-interferon alpha-2b, interferon alpha-2a, interferon beta, interferon beta-1a and interferon gamma; insulins; antibodies, such as rituximab, infliximab, trastuzumab, adalimumab, omalizumab, tositumomab, efalizumab, and cetuximab; antibody fragments; blood factors such as alteplase, tenecteplase, factor VII(a), factor VIII; colony stimulating factors such as filgrastim, pegfilgrastim; growth hormones such as human growth factor or somatropin; interleukins such as interleukin-2 and interleukin-12; growth factors such as beclapermin, trafermin, ancetism, keratinocyte growth factor; LHRH analogues such as leuprolide, goserelin, triptorelin, buserelin, nafarelin; antigens, vaccines; etanercept, imiglucerase, drotrecogin alpha.

Antigens and vaccines, whether these constitute peptides, proteins, lipoproteins, polysaccharides, live or inactivated microorganisms or viruses, or subunits thereof, including any adjuvants capable of increasing an immune response triggered by an antigen or vaccine, form another preferred group of active compounds for whose delivery the present invention is useful.

Other preferred active compounds are polysaccharides and oligo- or polynucleotides, DNA, RNA, iRNA, hormones, cytostatic agents, cytotoxic agents, antibiotics, and living cells. Another class of preferred active compounds comprises drug substances acting on the central nervous system, even if they are small molecules and orally bioavailable, for example risperidone, zuclopenthixol, fluphenazine, perphenazine, flupentixol, haloperidol, fluspirilen, quetiapine, clozapine, amisulprid, sulpirid, ziprasidon, etc.

Alternatively, the active compound may be a native living cell, a fragment of a living cell, a modified cell, or a plurality of cells. Encapsulated or immobilized cells can potentially be injected or implanted to replace physiological functions which are absent in a patient due to a specific disease or condition. For example, diabetes patients could be treated with gel-encapsulated Langerhans cells which can produce and secrete insulin. In this application, both the living cells and the insulin could be considered as the active compound.

In a further embodiment, the active compound may be incorporated in the form of drug-loaded colloidal carriers, such as nanoparticles, nanocapsules, liposomes, lipoplexes, lipid complexes, iscoms, polyplexes, solid lipid nanoparticles, virosomes, or drug conjugates.

In a further aspect, the invention is directed to the hydrogel itself which may be prepared according to the method described above. The hydrogel comprises a network of hydrophilic polymeric chains which are interconnected to each other through covalent crosslinks. At least some of the linkers comprise at least one bond which is hydrolysable under physiological conditions and at least one moiety which is a cycloaddition product. The hydrogel may be prepared from one or more polymers as provided by the invention and disclosed above. It may optionally be in the form of microparticles or microspheres.

Again, it is noted that the same teachings regarding the selection of the polymer backbone, the bond which is hydrolysable under physiological conditions and the cycloaddition reactive moieties may be applied in the same manner as have been put forth in the context of the polymer claimed and described herein when designing or selecting the specific properties of the hydrogel. Similarly, the teachings of this description in the context of the method of making a hydrogel should be applied, as the case may be.

In particular, hydrogels predominantly comprising crosslinked polysaccharide chains are very suitable for the incorporation and the controlled delivery of active compounds. In contrast to other recently proposed hydrogels based on click chemistry, the hydrophilic polymeric chains are preferably crosslinked by low molecular weight linkers each comprising one or two bond which is hydrolysable under physiological conditions, such as carbonate ester bonds.

The rate of biodegradation of the hydrogel may be adjusted to the particular purpose or intended use. It depends *inter alia* on the relative number of crosslinks and on the number and chemical nature of the bond which is hydrolysable under physiological conditions in the crosslinks. Depending on the choice of the backbones, these may also contribute to the overall degradation rate of the hydrogel. For example, if the hydrogel is based on polypeptide backbones, the backbones themselves may hydrolyse appreciably over periods of weeks or months, whereas in the case of many polysaccharide-based hydrogels the degradation will predominantly occur through the hydrolysis of the crosslinkers, *i.e*. of the bond which is hydrolysable under physiological conditions in the linkers.

When used as a medicine or as a component of a pharmaceutical composition, the hydrogels as well as the compositions may optionally comprise further excipients. These are preferably selected from those excipients which are commonly used in pharmaceutical or food technology. They are primarily used to influence the performance of the formulation, such as the release profile, the viscosity and injectability, or the tolerability. Also, excipients may be used in response to the specific requirements resulting from the nature of the active ingredient, such as stabilisers. Common pharmaceutical excipients which may be useful in hydrogel formulations are humectants, bulking agent, stabilisers, wetting agents, pore forming agents, antioxidants, colouring agents, substances for adjusting the pH and/or the tonicity and the like.

Especially for injectable, implantable and pulmonary administration, the formulations must be sterile. Sterility can be achieved by the selection of appropriate manufacturing processes such as aseptical processing and/or sterilisation of the final product.

For storage, hydrogels may also be dried, and provided in a rewettable form. Especially with this application in mind, one of the embodiments of the invention is represented by a kit from which the hydrogel composition, or a formulation comprising such a composition, can be prepared. For instance, the kit may comprise a first primary package containing a solid-state material, such as granules, a powder, or a lyophilisate, comprising a hydrogel-based composition in a dried state, also referred to as a xerogel; and a second primary package containing a liquid for reconstituting the xerogel to form the hydrogel composition. The liquid comprises water and, optionally, further excipients, such as salts, stabilisers, surfactants etc. The active compound may be present in the xerogel, or in the liquid for reconstitution, or within a third component of the kit. The xerogel may be in the form of microparticles.

Especially in the form of films, sheets, or gels, the hydrogel compositions of the invention may also be used for tissue engineering applications, or as wound dressings. For these uses, the compositions may or may not comprise a pharmaceutically active compound as defined above. For instance, wound dressings in the form of hydrogel sheets may be useful to cover and protect a wound, which may be sufficient in some instances. In other cases, it may be more useful to incorporate an antimicrobial compound to prevent or treat local infections.

Further embodiments will become obvious from the following examples which illustrate the invention in some of its major aspects, without limiting the scope thereof. The following materials were used in the examples below:
Propargyl alcohol (PA-OH), fluorescein isothiocyanate dextran (FITC-dextran; Mw∼150 & 2000 kDa), 1,1'-carbonyldiimidazole (CDI), 3-chloropropanol, sodium azide, dextran (Mw~40 kDa), dimethyl sulfoxide (DMSO), ethyl acetate were purchased from Sigma-Aldrich-Fluka. Sodium ascorbate and tetrabutylammonium-hydrogen sulfate were purchased from Acros. Polyethylene glycol (20 kDa), dichloromethane, ether, copper sulfate (CuSO₄), magnesium sulfate and sodium sulfate were purchased from Merck. Phosphate buffered saline (PBS) was purchased from Dulbecco's.

### Example 1: Preparation of dextran-azidopropylcarbonate (dex-N₃).

Dextran-azidopropylcarbonate is a polymer comprising azide moieties that are capable of undergoing a cycloaddition reaction. The azide groups are connected to the dextran backbone via linkers that comprise a highly hydrolysable carbonate bond.

In a first series of steps, 3-azidopropyl carbonylimidazole was synthesised. A dry round bottomed flask was charged with 18.24 g ( 112.5 mMol) carbonyldiimidazole (CDI) and 200 ml ethyl acetate yielding a turbid suspension. Ethyl acetate was used as solvent instead of dichloromethane to avoid the formation of diazomethane which is prone to detonation. 6.96 ml (75 mMol, 7.58 g) 3-azidopropanol was added dropwise under vigorous stirring while the reaction mixture turned into a clear solution. After 2 h reaction at room temperature the solution was three times extracted with 200 ml water The organic layer was dried over magnesium sulfate. After filtering off the magnesium sulfate the solvent was evaporated by rotary evaporation and 3-azidopropyl carbonyldiimidazole (AP-CI) was obtained as a liquid. Yield was 52 %. ¹H-NMR in CDCl₃ recorded with a Bruker AVANCE 500 MHz spectrometer: δ (ppm) 2.03 (m, 2H, CH₂-CH₂-CH₂), 3.45 (t, 2H, N₃-CH2), 4.47 (t, 2H, CH₂-O), 7.0 (s, 1H, C=CH-N), 7.4 (s, 1H, N-CH=C), 8.1 (s, 1H, N-CH=N).

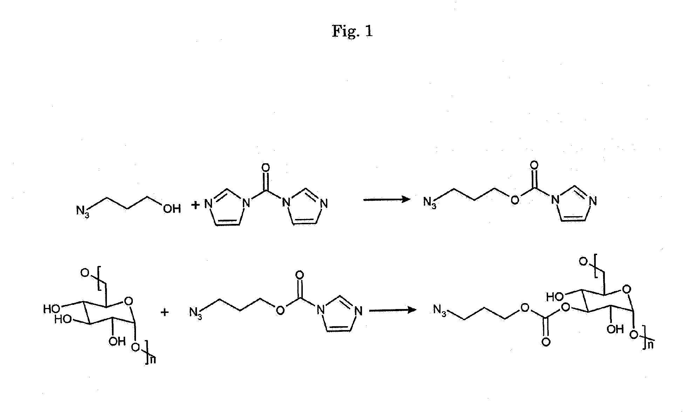

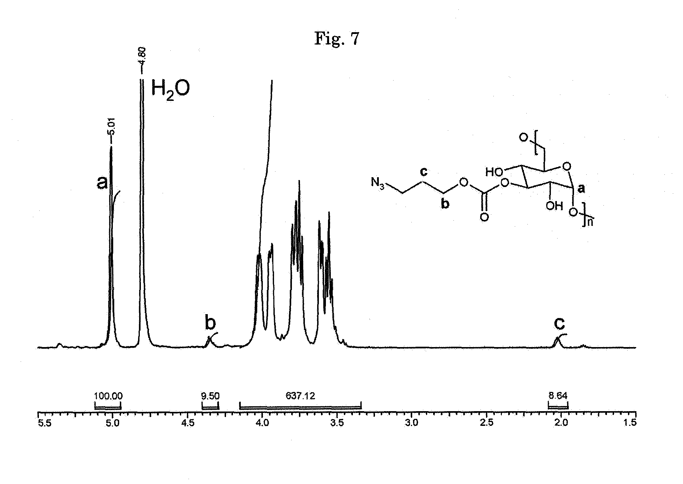

Next, dextran-azidopropylcarbonate (dex-N₃) with a degree of substitution of approx. 20 was prepared by coupling 3-azidopropyl carbonyldiimidazole ("activated azidopropanol") to dextran. In a dry round bottomed flask 1 g dextran (corresponding to 6.167 mMol glucopyranose repeating units) was dissolved in 20 ml anhydrous DMSO. To this mixture 0.301 g (1.54 mMol) or 1.204 g (6.16 mMol) AP-CI was added and the reaction was stirred overnight at 50°C under a nitrogen atmosphere. Subsequently the reaction mixture was put in dialysis bags (M_{w} cut off 3.5 kDa; Spectra Por) and dialysed against pure water for 5 days. After lyophilisation dextran-azidopropylcarbonate was obtained as a white fluffy powder. ¹H-NMR in D₂O recorded with a Bruker AVANCE 500 MHz spectrometer. δ 2.02 (2H, C≡C-CH₂), 3.5-4.3 (6H, dextran), 4.36 (2H, CH₂-CH₂-O), 5.02 (1H_{dextran}, O-C(CH)-O). Fig. 7 shows the ¹H-NMR spectrum in D₂O of dex-N₃ (500 MHz). The reaction scheme is shown in figure 1.

In a separate experiment, the procedure was repeated except that the ratio of 3-azidopropyl carbonyldiimidazole to dextran was decreased so that dextran-azidopropylcarbonate having a degree of substitution (DS) of approx. 5 was obtained.

### Example 2: Preparation of dextran-propargylcarbonate (dex-C≡C).

Dextran-propargylcarbonate is a polymer comprising alkyne moieties that are capable of undergoing a cycloaddition reaction. The alkyne groups are connected to the dextran backbone via linkers that comprise a highly hydrolysable carbonate bond.

In a first series of steps, propargyl carbonylimidazole was synthesised as follows. A dry round bottomed flask was charged with 29.19 g (180 mMol) CDI and 200 ml dichloromethane yielding a turbid suspension. 5.82 ml (100 mMol) propargyl alcohol was added under vigorous stirring yielding a clear solution upon dissolution of the propargyl alcohol. After 1 h reaction at room temperature the to mixture was extracted three times with 35 ml water. The organic layer was dried over magnesium sulfate. After filtering off the magnesium sulfate the liquid was evaporated by rotary evaporation and propargyl carbonylimidazole (PA-CI; 11.86 g; 79 % yield) was obtained as a dry powder. ¹H-NMR in CDCl₃ recorded with a Bruker AVANCE 500 MHz spectrometer: δ (ppm) 2.6 (t, 1H, HC≡C-), 5.0 (d, 2H, CH₂-O), 7.0 (s, 1H, C=CH-N), 7.4 (s, 1H, N-CH=C), 8.1 (s, 1H, N-CH=N).

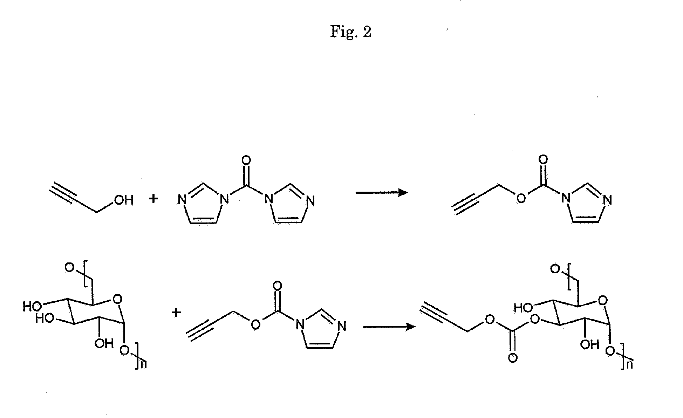

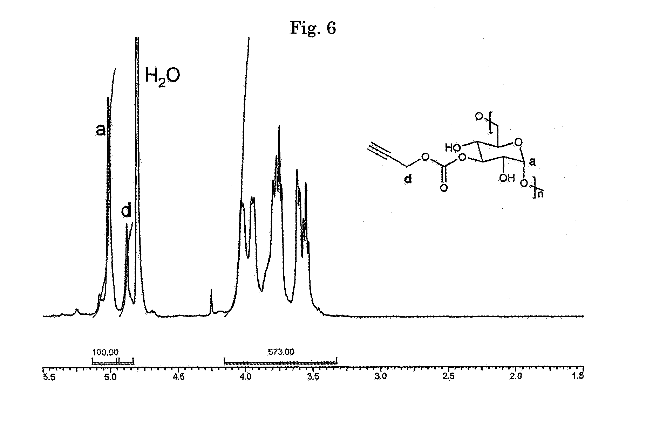

The activated propargyl alcohol, i.e. propargyl carbonylimidazole, was grafted onto dextran as follows to obtain dextran-azidopropylcarbonate. In a dry round bottomed flask 1 g dextran (corresponding to 6.167 mMol glucopyranose repeating units) was dissolved in 20 ml anhydrous DMSO. To this mixture 280 mg (1.86 mMol) PA-CI was added and the reaction was stirred overnight at 50°C under a nitrogen atmosphere. Subsequently the reaction mixture was put in dialysis bags (Mw cut off 3.5 kDa; Spectra Por) and dialysed against pure water for 5 days. After lyophilisation dextran-propargylcarbonate was obtained as a white fluffy powder.¹H-NMR in D₂O recorded with a Bruker AVANCE 500 MHz spectrometer: δ (ppm): 5.01 (1H_{dextran}, O-C(CH)-O), 4.88 (2H, C≡C-CH₂), 3.5-4.3 (6H, dextran). Fig. 6 shows the ¹H-NMR spectrum in D₂O of dex-C≡C (500 MHz). The reaction scheme is shown in fig. 2.

### Example 3: Preparation of hydrogel microparticles from dextran-propargylcarbonate and dextran-azidopropylcarbonate.

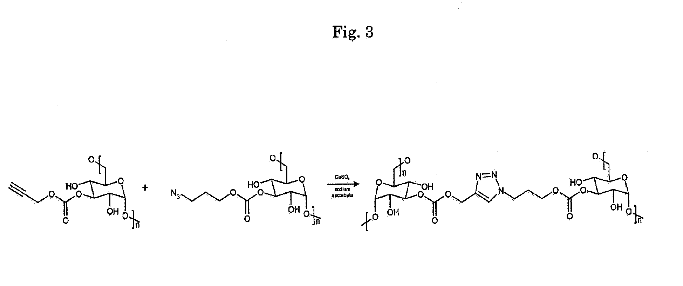

To 420 µl of an aqueous solution comprising 12.5 mg of dextran-azidopropylcarbonate (DS=20) as prepared according to example 1, 12.5 mg of dextran-propargylcarbonate (DS=20) as prepared according to example 2 and 2.5 mg of FITC-dextran (2,000 kDa), 536 µl of an aqueous solution (50 wt.-%) of polyethylene glycol was added and vortexed for 60 s so that a phase separation into a w/w-emulsion occurred. At room temperature, 17 µl of a solution of copper sulphate (50 mg/ml) and 17 µl of a solution of sodium ascorbate (50 mg/ml)was added, each addition followed by brief vortexing, thus inducing the cycloaddition reaction by which the reactive polymers were crosslinked, leading to the gelation of the dispersed emulsion droplets into microparticles. After 30 minutes, the microparticles were washed three times by the addition of water (10 ml) followed by centrifugation (1000 g, 3 min). The crosslinking reaction leading to the formation of a triazole ring structure was demonstrated by attenuated reflection infrared spectroscopy (ATR-IR) using a Bio-Rad 930C apparatus and the Golden Gate accessory (diamond crystal) by performing 32 scans at a resolution of 4 cm⁻¹. The reaction scheme is shown in figure 3.

In a separate experiment, hydrogel microparticles were prepared in a similar manner except that dextran-azidopropylcarbonate with a DS of 5 rather than 20 was used in combination with dextran-propargylcarbonate (DS=20).

### Example 4: Degradation of hydrogel microparticles from dextran-propargylcarbonate and dextran-azidopropylcarbonate.

Hydrogel microparticles incorporating FITC-dextran prepared according to example 3 were placed in a 15 ml conical centrifugation tube, dispersed in 10 ml PBS with sodium chloride (0.15 Mol) and adjusted to pH 7.4, and incubated at 37°C under continuous shaking. At regular time intervals the tubes were centrifuged (1000 g/ 10 min) and 1 ml of the supernatant is withdrawn and replaced by fresh PBS. The tubes were then vortexed to redisperse the microcapsules and the tubes are placed back at 37°C under continuous shaking.

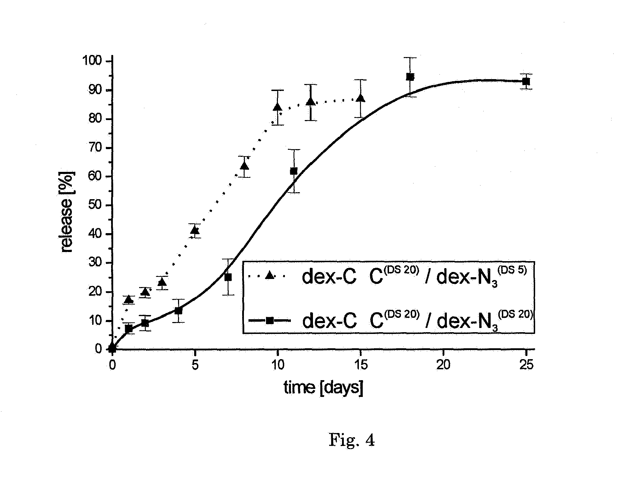

In result, the microparticles prepared from dextran-azidopropylcarbonate (DS=20) and dextran-propargylcarbonate (DS=20) showed a slower release of FITC-dextran than those prepared from dextran-azidopropylcarbonate (DS=5) and dextran-propargylcarbonate (DS=20). Approx. half of the incorporated marker compound was released after about 10 days and after about 6 days, respectively, as shown in fig. 4.

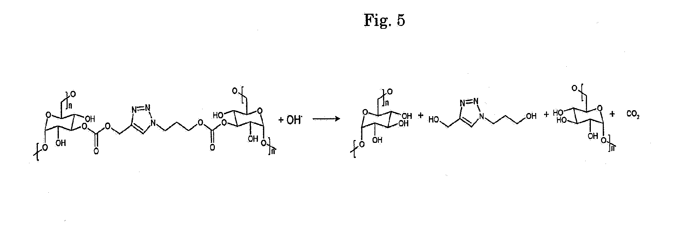

Without wishing to be bound by theory, it is believed that the release of the incorporated FITC-dextran marker is at least partially related to the hydrolytic degradation of the hydrogel, which is assumed to occur predominantly by the hydrolysis of carbonate ester bonds which are part of the crosslinks of the hydrogel, as shown in fig. 5.

## Claims

1. A polymer comprising a hydrophilic backbone and at least one moiety capable of undergoing a cycloaddition reaction, wherein said moiety is connected to the backbone through a linker which comprises a bond which is hydrolysable under physiological conditions.

2. The polymer of claim 1, wherein the hydrophilic backbone is selected from polysaccharides, polypeptides, poly(acrylates), poly(acrylamides), poly(alkyl acrylates), poly(alkyl acrylamides), in particular poly(methacrylate), poly(hydroxyethyl methacrylate), poly(hydroxypropyl methacrylate), poly(hydroxyethyl methacrylamide), poly(hydroxypropyl methacrylamide), poly(vinyl alcohol), poly(ethylene glycol), and water soluble polyphosphazenes.

3. The polymer of claim 1 or 2, wherein the bond which is hydrolysable under physiological conditions is selected from a carbonate, lactate, glycolate, succinate, ester, amide and peptide bond.

4. The polymer of any preceding claim, wherein the moiety capable of undergoing a cycloaddition reaction is selected from azide and alkyne moieties.

5. The polymer of any preceding claim, being selected from dextran-azidopropylcarbonate and dextran-propargylcarbonate.

6. A method of making a hydrogel, comprising the steps of:
(a) providing a first and a second polymer, each of the polymers comprising a hydrophilic polymeric backbone and one or more moieties capable of undergoing cycloaddition, said moieties of the first polymer being reactive with said moieties of the second polymer;
(b) allowing at least one of said moieties of the first polymer and at least one of said moieties of the second polymer to react with each other to form a cycloaddition product,
wherein at least one of the moieties of at least one of the polymers are connected to the backbone through a linker which comprises a bond which is hydrolysable under physiological conditions.

7. The method of claim 6, wherein the hydrophilic polymeric backbone of the first polymer is substantially the same as the hydrophilic polymeric backbone of the second polymer.

8. The method of claim 6 or 7, wherein a polymer according to any of the claims 1 to 5 is used as the first and/or the second polymer.

9. The method of any of claims 6 to 8, wherein dextran-azidopropylcarbonate is used as the first polymer and dextran-propargylcarbonate as the second polymer.

10. The method of any of claims 6 to 9, wherein step (b) is carried out in the presence of an active compound.

11. The method of any of claim 10, wherein the active compound is selected from the group consisting of peptides, proteins, polysaccharides, oligo-and polynucleotides, DNA, RNA, iRNA, hormones, cytostatic agents, cytotoxic agents, antibiotics, living cells, and drug substances acting on the central nervous system.

12. The method of any of claims 6 to 11, wherein step (b) is carried out in the presence of a catalyst such as a copper-(I) or -(II) catalyst, in particular copper sulphate.

13. The method of any of claims 6 to 12, wherein the first and the second polymer are comprised in the dispersed phase of a w/w-emulsion during the step of allowing the first and the second polymer to react with each other.

14. The method of any of claims 6 to 13, wherein at least one of the polymers provided in step (a) is prepared by coupling an activated reagent with a polymer having a hydrophilic backbone.

15. The method of claim 14, wherein carbonyl diimidazole is used for activating the reagent.

16. A hydrogel comprising a network of hydrophilic polymeric chains which are interconnected to each other through crosslinks, wherein at least one of said crosslinks is a covalent crosslink comprising at least one bond which is hydrolysable under physiological conditions and at least one moiety which is a cycloaddition product.

17. The hydrogel of claim 16, comprising an active compound which is selected from the group of peptides, proteins, polysaccharides, oligo- and polynucleotides, DNA, RNA, iRNA, hormones, cytostatic agents, cytotoxic agents, antibiotics, living cells, and drug substances acting on the central nervous system.

18. The hydrogel of claim 16 or 17, being prepared by the method of any of claims 6 to 13.

19. The hydrogel of any of claims 16 to 18, wherein the hydrophilic polymeric chains are predominantly derived from dextran.

20. A microparticle comprising the hydrogel of any of claims 16 to 19.

21. The use of the hydrogel of any of claims 16 to 19 or of the microparticle of claim 20 as a medicine or tissue replacement.

22. A pharmaceutical composition comprising the hydrogel of any of claims 16 to 19 or the microparticle of claim 20.
